# EUROPEAN PATENT SPECIFICATION

(11) **EP 1 475 552 B1**
(45) Date of publication and mention of the grant of the patent: **18.07.2007**
(21) Application number: 04252665.7
(22) Date of filing: 07.05.2004
(51) Int. Cl.: F16D 65/18

(54) **Lever assembly for a vehicle brake and method of assembly thereof**
Bremshebelanordnung und Verfahren zur Montage
Assemblage de levier de freinage et procédé pour son assemblage

(30) Priority: 09.05.2003 US 435156
(43) Date of publication of application: 10.11.2004
(73) Proprietor: ArvinMeritor Technology, LLC, Troy, MI 48084 (US)
(72) Inventor: McCann, Denis J., Rochester Hills, Michigan 48309 (US); Thompson, Richard Edgar, Cwmbran, Torfaen NP44 6TZ (GB)
(74) Representative: Foot, Paul Matthew James

(56) References cited:
- EP-A- 0 940 600
- EP-A- 1 233 202
- WO-A-96/34216
- US-A- 4 526 254
- US-A- 5 309 783
- US-A- 5 785 626

## Description

### BACKGROUND OF THE INVENTION

The present invention relates to a vehicle brake assembly and, more particularly, to a lever assembly for actuating the brake and a method of assembly therefor.

Disc brake assemblies typically include a disc brake caliper that houses a piston for forcing a pair of friction elements or brake pads into engagement with a rotor. Heavy-duty vehicle brake assemblies commonly include multiple pistons that are actuated by a cam manipulated by a pneumatic actuator. This type of arrangement is disclosed in patent application EP 1 233 202 (Meritor Heavy Vehicle Systems, LLC). The heavy-duty brake assemblies may be relatively complicated compared to passenger vehicle brake assemblies and may be specifically tailored to particular heavy vehicle applications.

Various assembly line sequence limitations may require later assembly of certain brake mechanism components within the housing. One assembly line sequence limitation may be the desire to manufacture each brake assembly in an identical manner and assemble unique components for specific vehicle applications at final assembly stages to minimize tracking each brake assembly through the entire assembly process.

Disadvantageously, a relatively large number of individual brake components may already be assembled by the time the brake assembly reaches the final assembly stages. Assembly limitations stemming from the previously assembled components may then have to be addressed by utilizing different and perhaps small or less convenient housing openings to assemble the remaining components.

Accordingly, it is desirable to provide a vehicle brake assembly which allows unique component installation during the final assembly stages while maintaining component reliability.

### SUMMARY OF THE INVENTION

The vehicle brake caliper assembly according to the present invention provides a lever assembly that includes an operating shaft for transmitting an input from an actuator to a brake mechanism, incorporating a lever aperture and a lever lockingly engageable thereto. The multi-component lever assembly provides for assembly during the final assembly stages of the brake assembly.

As the lever is fitted into a lever aperture, a snap ring is radially compressed into a groove in the lever. The lever and snap ring are passed through the lever aperture until the snap ring exits the opposite end of the operating shaft. The snap ring, being no longer constrained by the lever aperture, "snaps" open and the lever is secured in the operating shaft between the snap ring and the stop. An interface between the operating shaft and the lever includes an orientation feature such that the lever can only be mounted to the operating shaft in a proper orientation.

The operating shaft is assembled into the brake housing through a housing opening which is closed by a closing plate. The lever is then passed through a push rod opening and into the lever aperture until locked in place.

The present invention therefore provides a vehicle brake assembly which allows unique component installation during the final assembly stages while maintaining component reliability.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1 is a cross-sectional end view of a vehicle brake assembly of the present invention;
Figure 2 is a partially cross-sectional top elevational view of the brake assembly of the present invention;
Figure 3 is an exploded perspective view of a lever assembly of the brake assembly of Figures 1 and 2;
Figure 4 is an assembled perspective view of the lever assembly illustrated in Figure 3; and
Figure 5 is a perspective view illustrating assembling the lever assembly into the brake housing.

### DETAILED DESCRIPTION OF THE PREFERRED EMBODIMENT

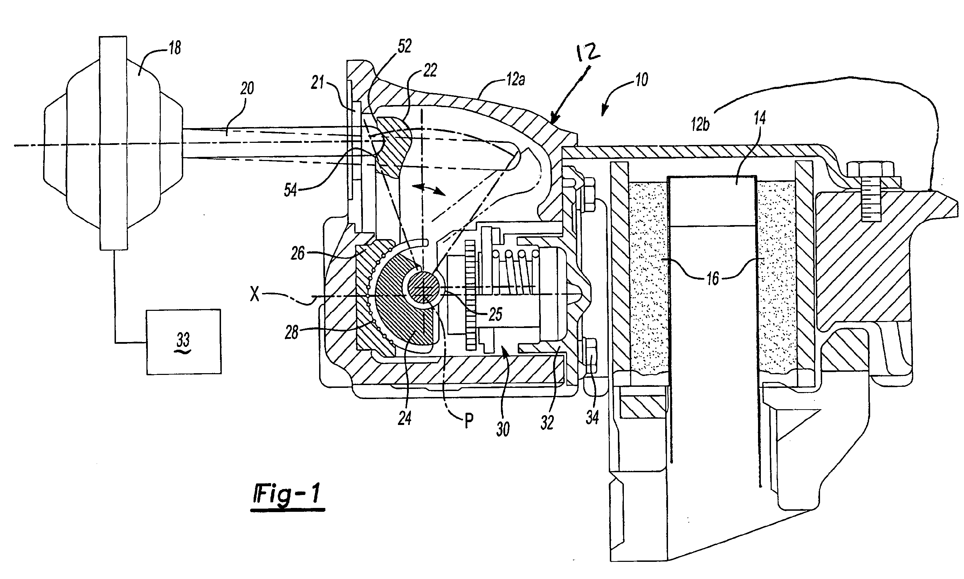

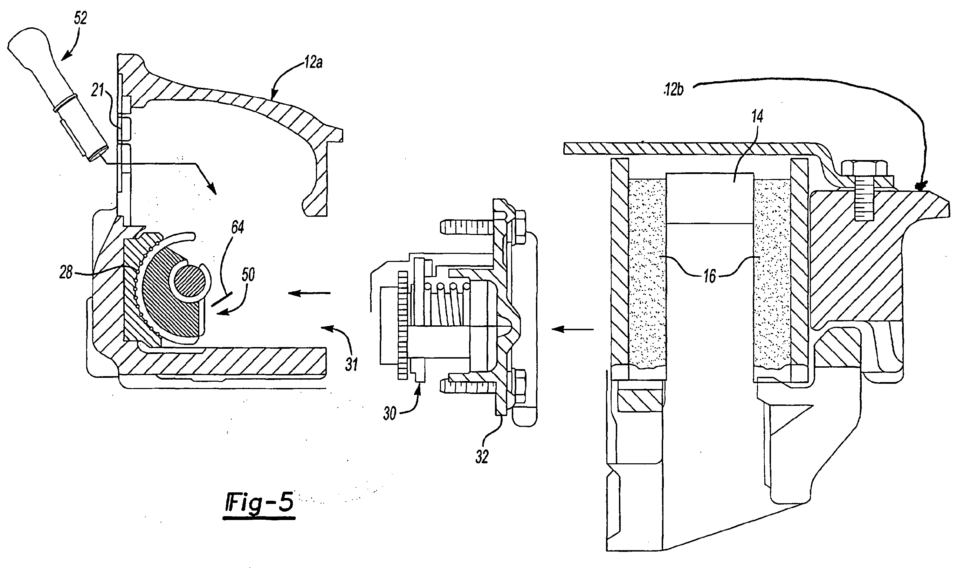

Figure 1 illustrates a general sectional view of a vehicle brake assembly 10. The vehicle brake assembly 10 includes a caliper 12 that may be constructed from one or more portions. A rotor 14 is arranged near or within a bridge portion 12b of the caliper 12 and has brake pads 16, or friction elements, arranged on either side of the outer surfaces of the rotor 14. The caliper 12 further includes a housing portion 12a. The housing portion 12a and bridge portion 12b may be integral or formed from separate pieces as illustrated in Figure 5.

An actuator 18, typically an air chamber, actuates a brake mechanism 30 to force the brake pads 16 into engagement with the rotor 14. The actuator 18 drives a push rod 20 through a push rod opening 21 to rotate a lever assembly 22 about a pivot point p. The lever assembly 22 includes a cam 24 having a profile 25 that cooperates with the brake mechanism 30 to drive the brake pads 16. The cam 24 is preferably received at least partially within a bearing block 26 supporting a plurality of needle bearings 28 within the housing 12. It should be understood that various actuating systems which are operated by a lever will benefit from the present invention.

The opening 31 (Figure 5) of the housing which receives the brake mechanism 30 is closed off on the front side, that is, in the position facing the brake disk, by a closing plate 32 which preferably at least partially supports the brake mechanism 30. The closing plate 32 is attached to the housing portion 12a by fasteners 34 or the like. Sealing elements are preferably located upon the sealing surfaces between the closing plate 32 and the housing portion 12a.

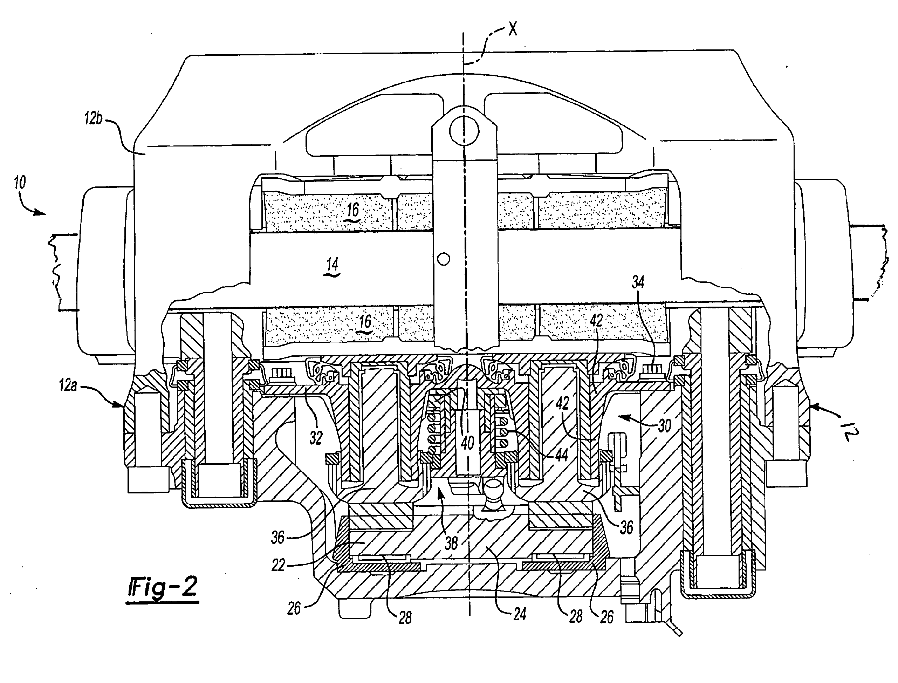

In operation, upon actuation of the brake pedal by the vehicle operator, a pneumatic output is typically produced by a control module 33 to energize the actuator 18. Heavy-duty vehicle brake assemblies typically include a pair of pistons 36 (Figure 2) that transmit the force generated by the actuator 18 through the push rod 20 and lever assembly 22 to the brake pads 16. It is to be understood that any suitable number of pistons 36 (Figure 2) may be used.

After the brakes are actuated, the brake pads 16 must be retracted to prevent the brake pads 16 from dragging on the rotor 14. To this end, a return assembly 38 operates to retract the pistons 36. The return assembly 38 generally includes a plate 40 adjacent a return spring 44. The return spring 44 is arranged between a portion of the housing 12a and the plate 40. The return spring 44 applies a force opposite the actuation force to the plate 40 and into the pistons 36 to retract the brake pads 16.

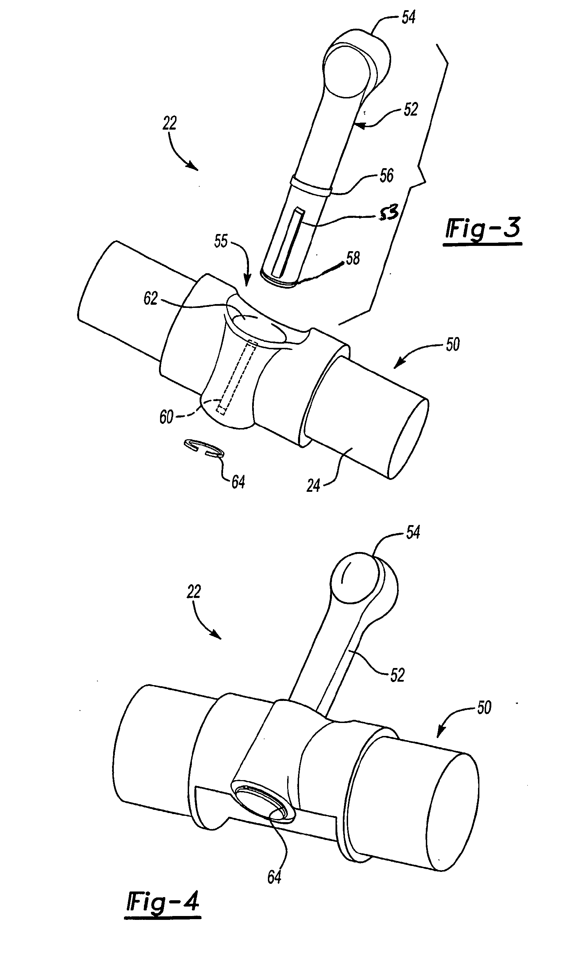

Referring to Figure 3, the lever assembly 22 includes an operating shaft 50 and a lever 52 mounted thereto (Figure 4). The operating shaft 50 includes the cam 24. It should be understood that various operating shaft 50 profiles will benefit from the present invention.

The lever 52 includes a cupped segment 54 for receipt of the push rod 20 (Figure 1). It should be understood that levers of a specific design, such as a desired length specific to a particular brake assembly 10 may be interchangeably assembled to a common operating shaft 50 according to the present invention. Likewise, operating shafts of a design specific to a particular brake assembly 10 may be interchangeably assembled with a common lever according to the present invention.

A stop 56 and a groove 58 are formed directly into the lever 52. That is, the lever 52 is preferably manufactured from a single piece of material to provide high strength. The lever 52 may also be manufactured of a material different than the operating shaft 50 to further increase the strength thereof.

An interface 55 between the operating shaft 50 and the lever 52 includes an orientation feature such that the lever 52 can only be mounted to the operating shaft 50 in a proper orientation. In other words, the cupped segment 54 for receipt of the push rod 20 is properly located. The orientation feature is preferably a longitudinal slot 60 within a lever aperture 62 in the operating shaft 50 and a longitudinal key 53 formed along the lever 52.

A snap ring 64 fits into the groove 58. The snap ring 64 is preferably pre-assembled into the groove 58 prior to fitting the lever 52 into the lever aperture 62 in the operating shaft 50. As the lever 52 is fitted into the lever aperture 62, the snap ring is radially compressed into the groove 58. The lever 52 and snap ring 64 are passed through the lever aperture 62 until the snap ring 64 exits the opposite end of the operating shaft 50 (Figure 4). The snap ring 64 being no longer constrained by the lever aperture 62 "snaps" open and the lever 52 is secured in the operating shaft 50 between the snap ring 64 and the stop 56 (Figure 4).

Referring to Figure 5, an assembly sequence for the lever assembly 22 is illustrated. The operating shaft 50 is assembled into the housing portion 12a. The operating shaft 50 is assembled into the housing such that the lever aperture 62 is generally in line with the push rod opening 21. The lever 52 is passed through the push rod opening 21 and into the lever aperture 62 until locked in place as described above. The brake mechanism 30, closing plate 32, housing portion 12a and bridge portion 12b may then be assembled together.

It should be understood that various assembly line sequence requirements may require later assembly of the lever 52 to the operating shaft 50. The push rod opening 21 and single direction insertion and locking of the lever 52 according to the present invention provides the flexibility to accommodate such assembly line sequence requirements.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A lever assembly (22) for a vehicle brake caliper (10) comprising:
an operating shaft (50) and a lever (52) for transmitting an input from an actuator to a brake mechanism, **characterised in that** said operating shaft comprises a lever aperture (62); and said lever is lockingly engageable with said lever aperture.

2. The lever assembly as recited in claim 1, further comprising a groove (58) about said lever.

3. The lever assembly as recited in claim 2, further comprising a snap ring (64) within said groove.

4. The lever assembly as recited in claim 2 or claim 3, further comprising a stop (56) longitudinally located away from said groove.

5. The lever assembly as recited in claim 4, wherein said stop is longitudinally located away from said groove at a distance at least equivalent to the longitudinal length of said lever aperture.

6. The lever assembly as recited in any preceding claim, further comprising an anti-rotation feature (53) between said lever and said operating shaft.

7. The lever assembly as recited in any preceding claim, further comprising a longitudinal slot (60) along said lever aperture and a longitudinal key (53) along said lever, said longitudinal key engageable with said longitudinal slot.

8. A method of assembling a lever assembly (22) for transmitting an input from an actuator to a brake mechanism into a vehicle brake caliper housing (12a), **characterised in that** it comprises the steps of:
(1) assembling an operating shaft (50) comprising a lever aperture (62) into a brake housing portion (12a) through a first opening (31); and
(2) passing a lever (52) though a second opening (21) in said brake housing to lockingly engage the lever into the lever aperture.

9. A method as recited in claim 8, wherein said second opening is a push rod opening (21).

10. A method as recited in claim 8 or claim 9, further comprising the steps of:
(a) assembling a snap ring (64) to the lever; and
(b) pushing the lever through the lever aperture to radially compress the snap ring until the snap ring exits the lever aperture and snaps open to lock the lever into the operating shaft.

11. A method as recited in claim any one of claims 8 to 10, further comprising the step of:
pushing the lever through the lever opening until a stop (56) on the lever contacts the operating shaft.

## Patentansprüche

1. Hebelbaugruppe (22) für einen Fahrzeugbremssattel (10), mit:
einer Betätigungswelle (50) und einem Hebel (52) zur Übertragung einer angeführten Energie von einem Aktuator auf eine Bremsvorrichtung, **dadurch gekennzeichnet, daß** die Betätigungswelle eine Hebelöffnung (62) aufweist und der Hebel mit der Hebelöffnung in einen Verriegelungseingriff gebracht werden kann.

2. Hebelbaugruppe nach Anspruch 1, die ferner eine um den Hebel umlaufende Nut (58) umfaßt.

3. Hebelbaugruppe nach Anspruch 2, die ferner einen Sprengring (64) in der Nut umfaßt.

4. Hebelbaugruppe nach Anspruch 2 oder Anspruch 3, die ferner einen Anschlag (56) umfaßt, der sich in Längsrichtung von der Nut entfernt befindet.

5. Hebelbaugruppe nach Anspruch 4, bei der sich der Anschlag in Längsrichtung in einem Abstand von der Nut befindet, der wenigstens der Länge der Hebelöffnung in Längsrichtung entspricht.

6. Hebelbaugruppe nach einem vorhergehenden Anspruch, die ferner eine Verdrehsicherung (53) zwischen dem Hebel und der Betätigungswelle umfaßt.

7. Hebelbaugruppe nach einem vorhergehenden Anspruch, die ferner längs der Hebelöffnung eine Längsnut (60) und längs des Hebels eine Längspaßfeder (53) umfaßt, wobei die Längspaßfeder mit der Längsnut in Eingriff gebracht werden kann.

8. Verfahren zum Einbau einer Hebelbaugruppe (22) zur Übertragung einer Eingangsgröße von einem Aktuator auf eine Bremsvorrichtung in ein Fahrzeugbremssattelgehäuse (12a), **dadurch gekennzeichnet, daß** es die folgenden Schritte umfaßt:
1) eine Betätigungswelle (50) mit einer Hebelöffnung (62) wird durch eine erste Öffnung (31) hindurch in einem Bremsgehäuseabschnitt (12a) angebracht; und
2) ein Hebel (52) wird durch eine zweite Öffnung (21) im Bremsgehäuse geführt, um den Hebel in der Hebelöffnung in einen Verriegelungseingriff zu bringen.

9. Verfahren nach Anspruch 8, bei dem die zweite Öffnung eine Druckstangenöffnung (21) ist.

10. Verfahren nach Anspruch 8 oder Anspruch 9, das ferner die folgenden Schritte umfaßt:
a) ein Sprengring (64) wird am Hebel angebracht; und
b) der Hebel wird durch die Hebelöffnung geschoben, damit der Sprengring radial zusammengedrückt wird, bis der Sprengring aus der Hebelöffnung austritt und aufschnappt, um den Hebel in der Betätigungswelle zu sichern.

11. Verfahren nach einem der Ansprüche 8 bis 10, das ferner den folgenden Schritt umfaßt:
der Hebel wird durch die Hebelöffnung geschoben, bis ein Anschlag (56) am Hebel mit der Betätigungswelle in Anlage gelangt.

## Revendications

1. Un assemblage (22) de leviers pour un étrier(10) de frein de véhicule, comprenant :
- un axe (50) d'actionnement et un levier (52) pour transmettre une force d'entrée exercée par un organe d'actionnement vers un mécanisme de frein, **caractérisé en ce que** ledit arbre d'actionnement comporte une ouverture (62) de levier ; et **en ce que** ledit levier susceptible d'être engagé de façon encliquetée dans ladite ouverture de levier.

2. L'assemblage de leviers selon la revendication 1, comportant en outre une gorge (58) autour dudit levier.

3. L'assemblage de leviers selon la revendication 2, comportant en outre une bague d'encliquetage ou circlip (64) à l'intérieur de ladite gorge.

4. L'assemblage de leviers selon la revendication 2 ou la revendication 3, comportant en outre une butée (56) disposée longitudinalement à distance de ladite gorge.

5. L'assemblage de leviers selon la revendication 2, dans lequel ladite butée est disposée longitudinalement éloignée de ladite gorge à une distance qui est au moins équivalente à la longueur longitudinale de ladite ouverture de levier.

6. L'assemblage de leviers selon l'une quelconque des revendications précédentes, comportant en outre un moyen (53) opposé à la rotation entre ledit levier et ledit arbre d'actionnement.

7. L'assemblage de leviers selon l'une quelconque des revendications précédentes, comportant en outre une rainure longitudinale (60) le long de ladite ouverture de levier et une clavette longitudinale (53) le long dudit levier, ladite clavette longitudinale étant susceptible de s'engager dans ladite rainure longitudinale.

8. Un procédé d'assemblage d'un assemblage (22) de leviers pour transmettre une force d'entrée exercée par un organe d'actionnement à un mécanisme de frein dans un boîtier (12a) d'étrier de frein d'un véhicule, **caractérisé en ce qu'**il comporte les étapes consistant :
(1) à assembler un arbre d'actionnement (50) comprenant une ouverture (62) de levier dans une partie (12a) de boîtier de frein à travers une première ouverture (31) ; et
(2) à faire passer un levier (52) à travers une deuxième ouverture (21) dans ledit boîtier de frein afin d'engager de façon encliquetée le levier dans l'ouverture de levier.

9. Un procédé selon la revendication 8, dans lequel ladite deuxième ouverture est une ouverture (21) de tige de poussée.

10. Un procédé selon la revendication 8 ou la revendication 9, comportant en outre les étapes consistant :
(a) à assembler une bague d'encliquetage ou circlip (64) au levier ; et
(b) à pousser le levier à travers l'ouverture de levier pour comprimer radialement la bague d'encliquetage jusqu'à ce que cette dernière sorte de l'ouverture de levier et s'encliquette en position d'ouverture pour bloquer le levier à l'intérieur de l'arbre d'actionnement.

11. Un procédé selon l'une quelconque des revendications 8 à 10, comportant en outre l'étape consistant :
- à pousser le levier à travers l'ouverture de levier jusqu'à ce qu'une butée (50) sur le levier vienne en contact avec l'arbre d'actionnement.
